# EUROPEAN PATENT APPLICATION

(11) **EP 0 844 774 A2**
(43) Date of publication of application: **27.05.1998**
(21) Application number: 97120768.3
(22) Date of filing: 26.11.1997
(51) Int. Cl.: H04M 1/72, H04Q 7/32

(54) **Wireless communication system**

(30) Priority: 26.11.1996 JP 315108/96; 24.12.1996 JP 344131/96
(71) Applicant: Murata Kikai Kabushiki Kaisha, Minami-ku, Kyoto-shi, Kyoto (JP)
(72) Inventor: Fukuma, Toshiharu, Murata Kikai Kotari-ryo C-112, Nagoakakyo-shi, Kyoto (JP); Hiraoka, Toru, Kyoto-shi, Kyoto (JP); Fukui, Satoshi, Uji-Shi, Kyoto (JP)
(74) Representative: Liedl, Christine, Dipl.-Chem.

(57) **Abstract**

The wireless communication system includes a main communication unit connected with a telephone line or network, a second communication unit wirelessly connected with the main communication unit and a third communication unit directly attached to the second communication unit. Digital data are wirelessly exchanged between the main communication unit and second communication unit so that accurate image data transmission is possible. The second communication unit includes a pseudo exchange circuit and is separatable from the third communication unit. After separation, the second communication unit may be attached to a fourth communication unit as a radio adapter so that the fourth communication unit can be used as a radio terminal device. When the main communication unit has a call accompanied with a request for silent reception, the third communication unit can also receive data without ringing. The second communication unit can identify the third communication unit so that the second communication unit can use a particular functionality possessed by the third communication unit.

## Description

### BACKGROUND OF THE INVENTION

### Technical Field

The present invention relates to a wireless or radio communication system, and more particularly to a system including a main communication unit connected with a network (or telephone line), an auxiliary or second communication unit wirelessly connected with the main communication unit and a third communication unit (e.g., facsimile machine) directly connected with the second communication unit.

### Background Art

Conventional wireless communication systems have a main communication unit connected with a telephone line or network, and a facsimile machine connected wirelessly as a communication terminal unit to the main communication unit. Like a cordless telephone, a second facsimile machine can communicate with a remote facsimile machine via the main communication unit.

If data transmission between the main communication unit and the facsimile machine is carried out using analog signals, image data reproduced at the receiving facsimile machine (the facsimile machine) likely includes various deficiencies due to noises and distortions of transmission waves. Therefore, there is a problem of low data transmission quality.

A communication system which includes a facsimile module and a cordless handset is for instance disclosed in Japanese Patent Application, Laid-Open Publication No. 4-291879. In this system, a tone ringer signal generated by the cordless handset is detected to start automatic facsimile data reception.

Recently, facsimile communication networks (referred to as an "F net") that do not ring at the receiving side upon signal/data reception have been developed. Specifically, the F net service does not cause a bell associated with the receiving facsimile machine to ring when a 1,300 Hz call signal is received. In the F net service, the 1,300 Hz call signal is considered a facsimile signal. Upon reception of the signal, the F net service immediately causes the facsimile machine to receive data from a remote facsimile machine. Therefore, a user of the facsimile machine on the receiving side is not bothered by ringing before his or her facsimile machine starts image data reception.

It should be noted that a common call signal is a 16 Hz signal. This call signal is used for a common telephone line network.

Another communication service which is known in the art is generally referred to as "dial-in service". A plurality of terminals such as facsimile machines and telephones use a single telephone line. Different telephone numbers are assigned to the communication terminals so that a third party can directly contact a desired communication terminal by dialing the terminal's number without having to first contacting a receptionist.

### SUMMARY OF THE INVENTION

It is a first object of the present invent ion to provide a wireless communication system which is able to transmit accurate image data when wireless image data transmission from a main communication unit to a second communication unit is performed.

A second object of the present invention is to provide a wireless communication system which can use a second communication unit as an adapter for another (or third) communication terminal unit located at an arbitrary location such that the third communication terminal device can be used as a wireless communication terminal.

A third object of the present invention is to provide a wireless communication system which causes a third communication terminal unit (facsimile machine) associated with a second communication unit to silently receive data when the main communication unit receives a call with a request for silent reception (data reception without ringing an electric bell).

A fourth object of the present invention is to provide a wireless communication system which has a second communication unit and a third communication terminal unit connected with the second communication unit such that the second communication unit and third terminal unit can each identify the other unit.

According to a first aspect of the present invention, there is provided a wireless communication system comprising a main communication unit connected With a telephone line or network, a second communication unit wirelessly connected with the main communication unit and a third communication unit directly attached to the second communication unit such that data is transmitted digitally between the main communication unit and the second communication unit. Image data received from a remote facsimile machine via an exchange are converted into digital signals (digital data) by the main communication unit, and the digitized data are transmitted to the second communication unit. Then, the digital data are transferred to the third communication unit for printing. Therefore, an ultimate image resulting from the transmitted image data has less influence of noises and transmission wave distortions as compared with analog image data transmission.

The second communication unit may include a pseudo exchange circuit and be separatable from the third communication unit. The pseudo exchange circuit is designed to serve as an interface which is equivalent to PSTN. After separation, therefore, the second communication unit may be attached to a fourth existing communication unit such that the fourth communication unit is used as a cordless terminal device.

The main communication unit may further include means for detecting a call signal from an exchange and means for outputting a command signal to the second communication unit, based on results of detection by the detecting means, to cause the second communication unit to receive the data supplied from a remote facsimile machine without ringing (i.e., in a silent reception mode). The pseudo exchange circuit may include means for outputting a pseudo call signal to the third communication terminal unit, based on the command signal from the command signal outputting means, such that the third communication terminal unit receives the image data from the remote facsimile machine in a silent reception mode. The detecting means may determine the type of call signal.

According to a second aspect of the present invention, there is provided a wireless communication system comprising a main communication unit connected with a telephone line or network, a second communication unit wirelessly connected with the main communication unit and a third communication unit connected by wire with the second communication unit. The third communication unit sends a predetermined signal at predetermined intervals to the second communication unit, and only when the second unit detects the predetermined signal sent by the third communication unit, is the third communication unit allowed to send/receive data to/from the second communication unit. The predetermined signal indicates that the third communication unit has a particular function executable in this system and informs the second communication unit of such a fact. Therefore, the second communication unit is able to take advantage of functionality possessed by the third communication unit.

According to a third aspect of the present invention, there is provided a wireless communication system comprising a main communication unit connected with a telephone line or network, a second or auxiliary communication unit wirelessly connected with the main communication unit and a third communication unit connected by wire with the second communication unit in a manner such that the second communication unit sends a predetermined signal to the third communication unit when it is activated, and only when the third communication unit outputs a tone signal to the second communication unit in response to the predetermined signal, is the third communication unit allowed to send/receive data to/from a remote terminal. The predetermined signal and tone signals are signals for the second communication unit to know whether the third communication terminal unit has a particular function executable in this system. Therefore, the cordless handset is able to use the function which the third communication terminal unit has.

According to a fourth aspect of the present invention, there is provided a wireless communication system comprising a main communication unit connected with a telephone line or network, a second communication unit wirelessly connected with the main communication unit and a third communication unit connected by wire with the second communication unit in a manner such that the second communication unit sends a pseudo call signal to the third communication unit in response to a signal indicating arrival of a call sent from the main communication unit, and the third communication unit is allowed to send/receive data to/from a remote terminal only when the third communication unit outputs a tone signal in response to the pseudo call signal. The pseudo signal and tone signal are signals for the second communication unit to know whether the third communication unit has a particular function executable in this system. Therefore, the second communication unit can take an advantage of functionality possessed by the third communication unit.

### BRIEF DESCRIPTION OF THE ACCOMPANYING DRAWINGS

Figure 1 illustrates a block diagram of a main communication unit in a wireless communication system according to the present invention;
Figure 2 illustrates a block diagram of a second communication unit in the wireless communication system according to the present invention;
Figure 3 illustrates a block diagram of a cordless handset in the wireless communication system according to the present invention;
Figure 4 illustrates a block diagram of a facsimile machine as a third communication unit in the wireless communication system according to the present invention;
Figure 5 illustrates a diagram of the wireless communication system according to the present invention;
Figure 6 shows a table of dial-in telephone numbers assigned to the three handsets and kinds/functions of the handsets;
Figures 7 and 8 show in combination a flowchart for operations of the main communication unit when there is a call on a telephone line;
Figure 9 illustrates a flowchart for operations of the second communication unit when there is a call on the telephone line;
Figure 10 is a timing chart corresponding to the flowchart shown in Figure 9 when there is a call accompanied with a request for data reception without ringing (silent reception);
Figure 11 is a timing chart similar to Figure 10 when there is a call accompanied with a request for data reception with ringing (ordinary reception);
Figure 12 is a flowchart for operations of the second communication unit when a telephone call or facsimile data transmission is made to a remote telephone or facsimile machine from the wireless communication system of the invention;
Figure 13 is a timing chart corresponding to the flowchart shown in Figure 12 when facsimile data transmission is made to a remote facsimile machine;
Figure 14 is a timing chart similar to Figure 13 when a telephone call is made to a remote telephone;
Figure 15 illustrates a block diagram of a control part of a second communication unit;
Figures 16(a) and 16(b) illustrate a first example of how the second communication unit shown in Figure 15 determines a connection condition of the third communication unit, in which Figure 16(a) depicts when the third communication unit is in a stand-by condition and Figure 16(b) depicts when the third communication unit generates a request signal for connection allowance;
Figures 17(a) to 17(c) illustrate a second example of how the second communication unit shown in Figure 15 determines a connection condition of the third communication unit, in which Figure 17(a) depicts when the third communication unit is in the stand-by condition, Figure 17(b) depicts when the second communication unit sends a signal for determination of the connection condition and Figure 17(c) depicts when the third communication unit returns a reply signal;

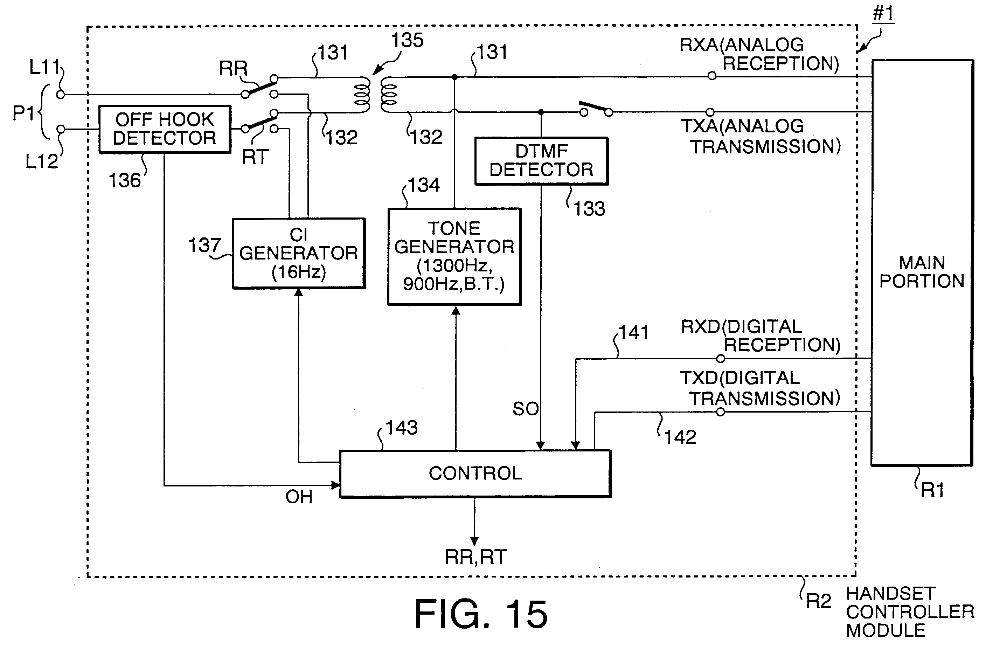

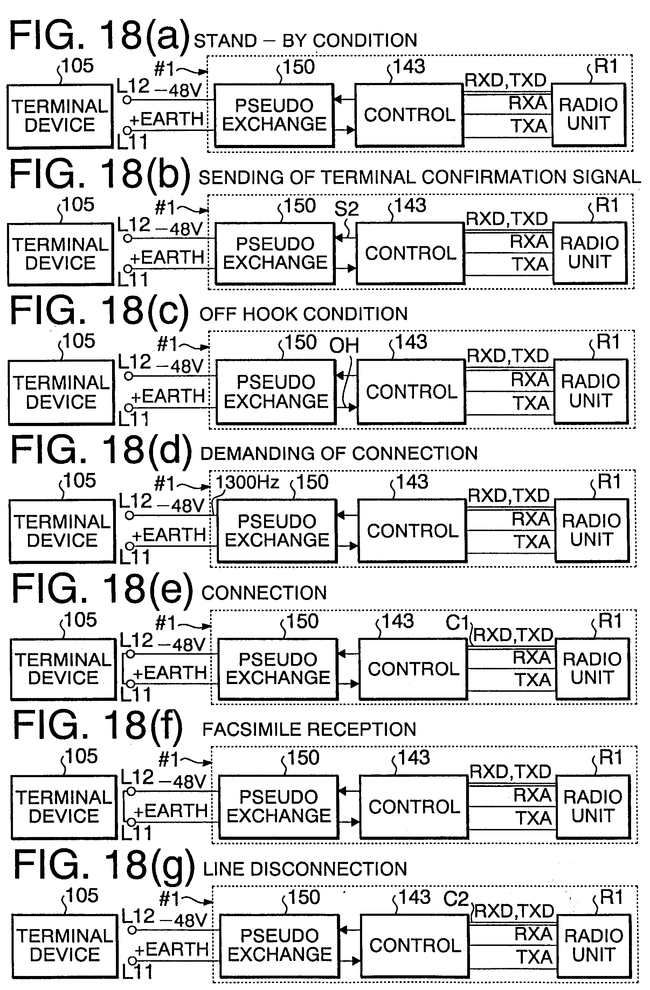

Figures 18(a) to 18(g) illustrate a third example of how the second communication unit of Figure 15 determines a connection condition of the third communication unit and receives data from F net, in which Figure 18(a) depicts when the third communication unit is in the stand-by condition, Figure 18(b) depicts when the second communication unit sends a signal for determination of the connection condition, Figure 18(c) depicts when the third communication unit is in an offhook condition, Figure 18(d) depicts when a 1,300 Hz tone signal is sent to the third communication unit from the second communication unit to demand formation of a direct current circuit, Figure 18(e) depicts when the third communication unit forms a direct current circuit for line connection. Figure 18(f) depicts when the third communication unit receives facsimile data and Figure 18(g) depicts when facsimile data reception is completed; and

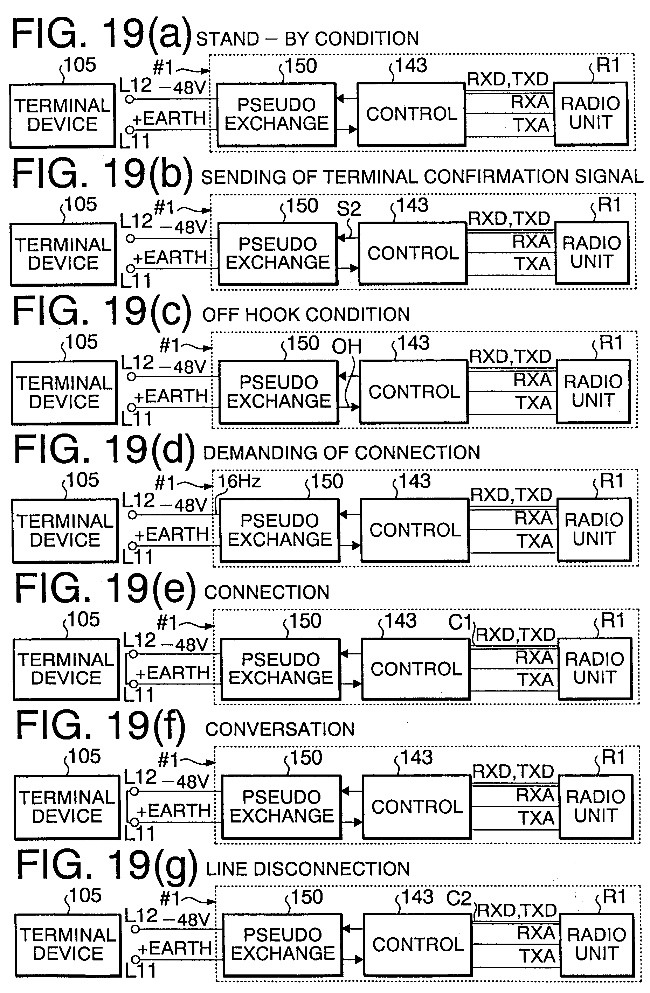

Figures 19(a) to 19(g) illustrate a fourth example of how the second communication unit of Figure 15 determines a connection condition of the third communication unit and receives a telephone call or facsimile data from a remote telephone or facsimile through an ordinary telephone network, in which Figure 19 (a) depicts when the third communication unit is in the stand-by condition, Figure 19(b) depicts when the second communication unit sends a signal for determination of the connection condition, Figure 19(c) depicts when the third communication unit is in an offhook condition, Figure 19(d) depicts when a 16 Hz call signal is sent to the third communication unit from the second communication unit to demand direct current circuit formation, Figure 19(e) depicts when the third communication unit forms a direct current circuit for line connection, Figure 19(f) depicts when the third communication unit receives facsimile data or a user of the third communication unit talks to a third party over an attached handset of the third communication unit and Figure 19(g) depicts when the third communication unit opens the direct current circuit for line disconnection.

### DETAILED DESCRIPTION OF THE PREFERRED EMBODIMENTS

Hereafter, preferred embodiments of the present invention will be described with reference to the accompanying drawings.

### First Embodiment:

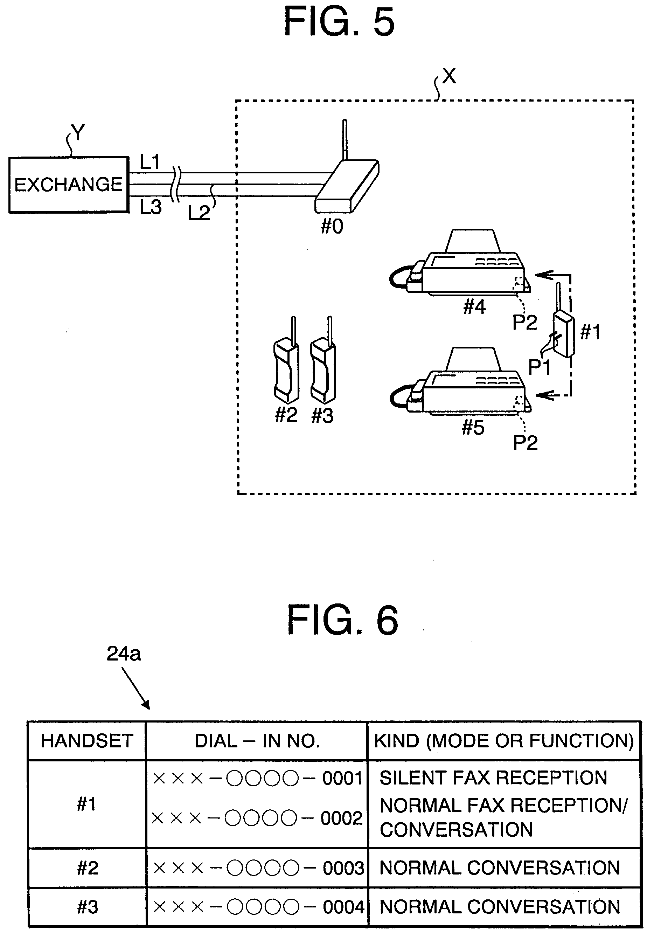

Referring first to Figure 5, a wireless communication system of the present invention is designated at "X" and includes a main communication unit #0, a second communication unit #1, cordless hand sets #2 and #3, and a pair of third communication units #4 and #5. The third communication units #4 and #5 are facsimile machines respectively in this particular embodiment. The main communication unit #0 is connected with three PSTN telephone lines (general telephone line network) L1 to L3. The second communication units #1 and cordless handsets #2 and #3 are wirelessly connectable to the main communication unit #0. The second communication unit #1 is associated with the facsimile machine #4 (or #5) and serves as an adapter when data is exchanged between the main communication unit #0 and facsimile machine #4 (or #5). In this embodiment, the user of the wireless communication system X can talk to a third party through each of the cordless handsets #2 and #3. When the second communication unit #1 is attached to the facsimile machine #4 (or #5) a pair of terminals P1 of the second communication unit #1 is connected with a pair of terminals P2 of the facsimile machine #4 (or #5). When the second communication unit #1 is removed from the facsimile machine #4 (or #5), then the terminals P1 and P2 are disconnected from each other.

Wireless communication between the second communication unit #1 and cordless handsets #2 and #3 and the main unit #0 is carried out by means of a mobile communication service referred to as PHS (Personal Handyphone System). PHS operates on a data transmission technique called TDMA/TDD (Time Division Multiple Access/Time Division Duplex) so that frequency utilization efficiency is good. In addition, PHS uses an ADPCM (Adaptive Differential Pulse-Code Modulation) technique as a voice (or speech) coding method so that line quality is good and data transmission speed is higher than with an analog cordless telephone. Consequently, facsimile communication using PHS can provide high quality data communication.

Among the three telephone lines L1 to L3, the first telephone line L1 is used to transfer voice or facsimile data to the second communication unit #1 or the cordless handset #2 or #3 as specified by a dial-in call; the second telephone line L2 is exclusively used to transmit facsimile data from a remote facsimile machine to the facsimile machine #4 (or #5) through the second communication unit #1 ; and the third telephone line L3 is exclusively used for the F net. In the illustrated embodiment, two dial-in telephone numbers are allotted to the second communication unit #1 (one for facsimile data reception without ringing and one for facsimile data reception with ringing or telephone conversation), and one dial-in telephone number is assigned to each of the cordless handsets #2 and #3 respectively.

When the main unit #0 receives an incoming call signal from an outside line on the telephone line L1 via the exchange Y, it recognizes the call as a dial-in call and transfers the call to either the second communication unit #1 and cordless handsets #2 and #3. When the main unit #0 has a call through the facsimile line L2, it immediately transfers the call to the second communication unit #1. When the main unit #0 receives a call signal of 1,300 Hz through the F net cable L3, then it also transfers the call to the second communication unit #1. Because the second communication unit #1 is attached to the first facsimile machine #4 (or second facsimile machine #5), calling of the second communication unit #1 from the main unit #0 is equivalent to calling of the associated facsimile machine #4 (or #5).

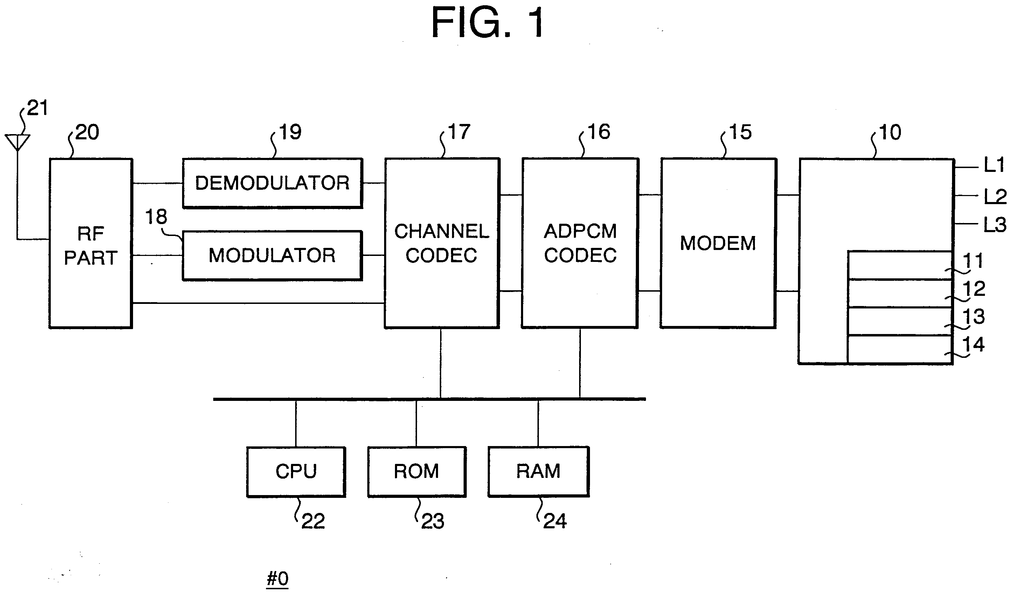

Next, the electrical configuration of the main communication unit #0 will be described with reference to Figure 1.

Referring first to Figure 1, the main communication unit #0 includes NCU (Network Control Unit) 10 which controls connection and disconnection between the telephone lines L1 to L3 and the main communication unit #0. NCU 10 includes a dial-in processing circuit 11, a first call signal detection circuit 12, a second call signal detection circuit 13 and a DTMF detection circuit 14. The dial-in processing circuit 11 is provided for processing needed for dial-in connection. The first call signal detection circuit 12 is designed to detect a call signal of 16 Hz sent from the exchange Y. The second call signal detection circuit 13 is adapted to detect a call signal of 1,300 Hz sent from the exchange Y. The DTMF detection circuit 14 detects a touch-tone (DTMF signal) coming from the exchange Y. NCU 10 is connected with a modem 15 for modulating and demodulating data outgoing from and incoming to the main communication unit #0.

ADPCM codec 16 is connected with the modem 15 and performs coding of data received via the telephone lines L1 to L3 and decoding of data received wirelessly from the second communication unit #1 and cordless handsets #2 and #3 by ADPCM. A channel codec 17 connected with the ADPCM codec 16 prepares data conforming to TDMA/TDD and extracts necessary data supplied from the second communication unit #1 and cordless handsets #2 and #3. A modulation part 18, a demodulation part 19 and an RF part 20 are connected in parallel to the channel codec 17. The modulation part 18 and demodulation part 19 are also connected with the RF part 20 in parallel. The modulation part 18 modulates data by a pi(π)/4 shift QPSK technique before it is transmitted to the second communication unit #1 and cordless handsets #2 and #3. The demodulation part 19 demodulates data sent from the second communication unit #1 and cordless handsets #2 and #3 by the pi/4 shift QPSK technique, FR part 20 transmits data input from the modulator part 18 through an antenna 21 to the second communication unit #1 and cordless handsets #2 and #3, and sends data received through the antenna to the demodulator 19.

The main communication unit #0 further includes CPU 22 to control the above described elements, ROM 23 to permanently store various programs and data needed for the above control and RAM 24 to temporarily store data necessary for the above control. CPU 22, ROM 23 and RAM 24 are connected to the channel codec 17 and ADPCM codec 16 respectively,

Referring to Figure 6, illustrated is a table 24a stored in RAM 24. This table 24a contains information about relationship between the second communication unit #1 and cordless handsets #2 and #3, their dial-in telephone numbers and functions/operations/modes/kinds. The second communication unit #1 is assigned two dial-in numbers: one for facsimile data reception with no ringing bells (silent reception) and one for ordinary telephone conversation (voice communication) or facsimile data reception. It should be remembered that calling the second communication unit #1 is the same as calling the associated facsimile machine #4 (or #5) as the third communication unit. Therefore, table 24a also indicates that the facsimile machine #4 (or #5) associated with the second communication unit #1 also has two dial-in numbers. In the illustrated embodiment, a telephone number having "0001" in its last four digits is a number for silent facsimile reception mode and a telephone number having "0002" is a number for ordinary conversation/facsimile mode. A single dial-in telephone number is assigned to each of the cordless handsets #2 and #3: a telephone number having "0003" in its last four figures is assigned to the cordless handset #2 and a telephone number having "0004" is assigned to the cordless handset #3. The two cordless handsets #2 and #3 have only ordinary conversation mode (voice communication mode).

CPU 22 selects one of the second communication unit #1 and cordless handsets #2 and #3 according to the telephone number table 24a and causes the RF part 20 to send a digital command signal based on the dial-in telephone number detected by the DTMF detection circuit 14. The command signal is a signal for generation of a 1,300 Hz call signal (referred to as "command 1300") or a signal for generation of a 16 Hz call signal (referred to as "command 16"). RF part 20, CPU 22, ROM 23 and RAM 24 constitute in combination a command signal output means.

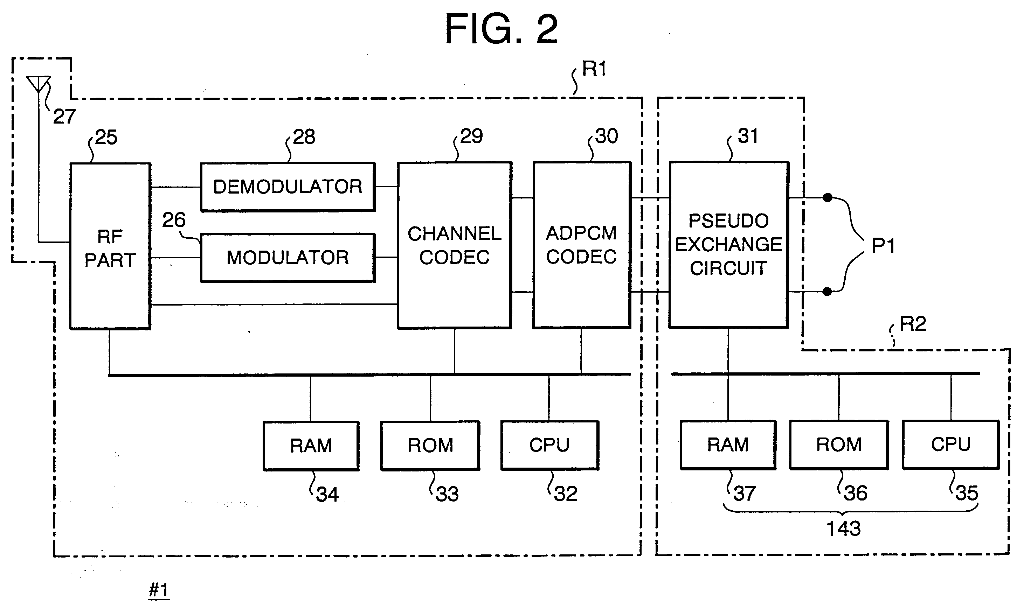

Next, the electric configuration of the second communication unit #1 will be described in reference to Figure 2.

The second communication unit #1 includes a main portion R1 and a terminal control portion R2. The main portion R1 includes an RF part 25, a modulation part 26, an antenna 27, a demodulation part 28, a channel codec 29 and ADPCM codec 30. The RF part 25 transmits a signal supplied from the modulation part 26 to the main communication unit #0 via the antenna 27, and outputs to the demodulation part 28 a signal received via the antenna 27. The modulation part 26 modulates data by pi(π)/4 shift QPSK before the data is wirelessly transmitted from the second communication unit #1. The demodulation part 28 demodulates data that has been wirelessly transmitted to the second communication unit #1 by pi/4 shift QPSK. The channel codec 29 prepares data conforming with TDMA/TDD and extracts necessary data. The ADPCM codec 30 decodes data wirelessly received data using ADPCM.

The main portion R1 of the second communication unit #1 further includes CPU 32 for controlling the above mentioned elements, ROM 33 for permanently storing programs and data necessary for the control and RAM 34 for temporarily storing data necessary for the control. CPU 32 outputs a transmission command signal which corresponds to the command 1300 or command 16 supplied from the main communication unit #0.

The terminal portion R2 of the second communication unit #1 includes a pseudo exchange circuit 31, a secondary CPU 35, ROM 36 and RAM 37. The secondary CPU 35 is provided for controlling the pseudo exchange circuit 31. ROM 36 is provided for permanently storing various programs and data required for the control executed by the secondary CPU 35. RAM 37 is provided for temporarily storing data required for the control. The pseudo exchange circuit 31 outputs a call signal of 16 Hz or 1,300 Hz to the facsimile machine #4 (or #5). The secondary CPU 35 outputs a call signal of 16 Hz or 1,300 Hz to the pseudo exchange circuit 31 based on the transmission command signal fed from CPU 32. The pseudo exchange circuit 31 has three functions: a function for feeding current necessary for facsimile transmission by the facsimile machine #4 (or #5), a function for detecting if the facsimile machine #4 (or #5) is offhooked, and a function for detecting a touch-tone generated by the facsimile machine #4 (or #5). The sub CPU 35 also monitors connection and disconnection of the facsimile machine #4 (or #5).

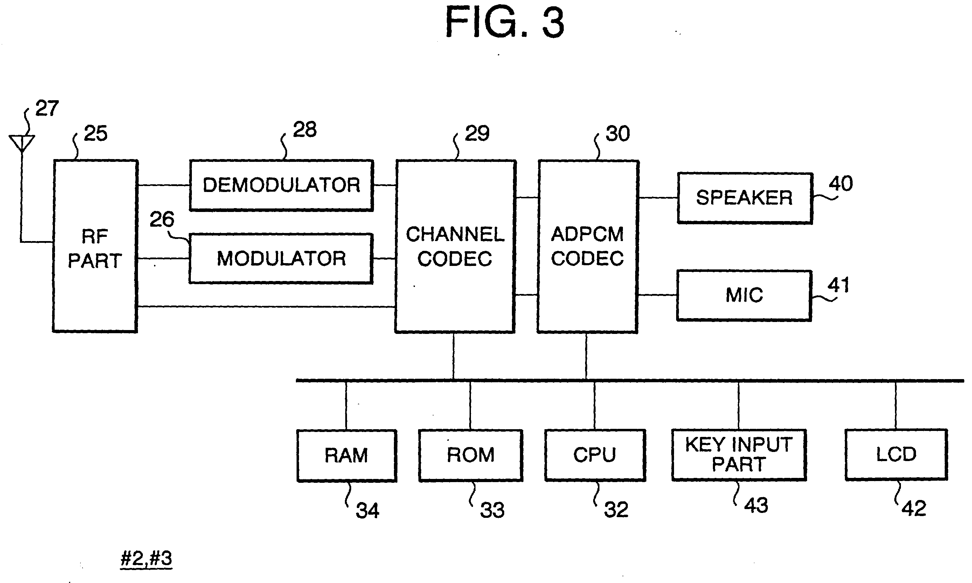

Referring now to Figure 3, illustrated is the electrical configuration of the cordless handset #2 (or #3). The cordless handsets #2 and #3 are identical in this particular embodiment so that the handset #2 will be described below and description of the handset #3 will be omitted here. The cordless handset #2 includes an RF part 25, a modulation part 26, an antenna 27, a demodulation part 28, a channel codec 29 and an ADPCM codec 30. This is the same structure as that of the second communication unit #1 illustrated in Figure 2, so a detailed description of that unit is herein omitted. A speaker 40 and a microphone 41 are connected with the ADPCM codec 30 in parallel. The ADPCM codec 30 demodulates wirelessly received data by ADPCM and outputs it to the speaker 40. The ADPCM codec 30 also codes voice data input through the microphone 41 in ADPCM. The cordless handset #2 also includes CPU 32 for controlling of the above elements, ROM 33 for permanent storage of various programs and data needed for the control executed by CPU 32 and RAM 34 for temporary storage of various data needed for the control executed by CPU 32. LCD 42 is a display for visually indicating various information such as a telephone number input by a user. The user can input a telephone number using a key input part 43 provided with a set of numeric keys or the like.

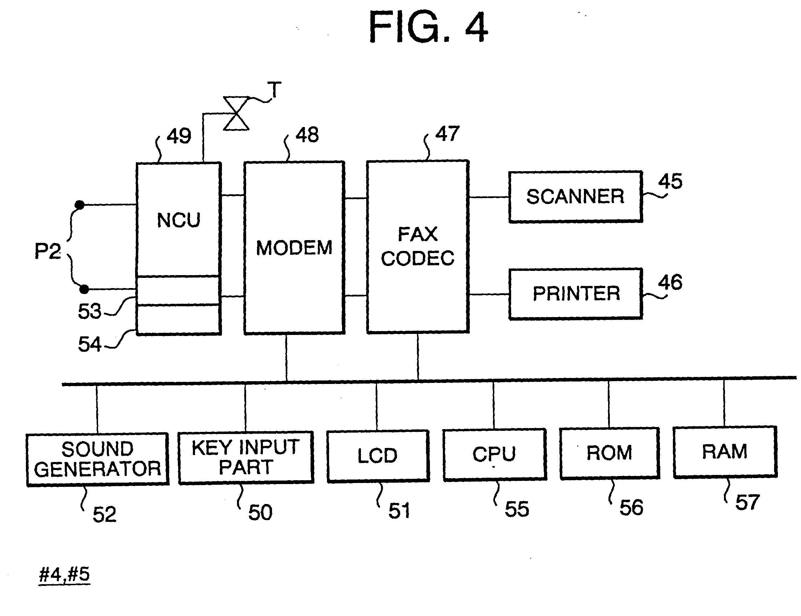

Referring to Figure 4, depicted is the electrical configuration of the facsimile machine #4 or #5 as the third communication unit. Since the first and second facsimile machines #4 and #5 are identical, only the first facsimile machine #4 will be described below.

The facsimile machine #4 includes a reading element (scanner) 45, a recording element (printer) 46, a fax codec 47, a modem 48, an NCU 49, a key input part 50, an LCD 51 and a voice transmission part 52. The reading element 45 includes a scanner such as CCD and scans a document or image to provide binary image data. The recording element 46 prints the transmitted image data on a recording sheet. The fax codec 47 codes the binary image data supplied from the scanner 45 for redundancy reduction. The fax codec 47 also decodes the coded data supplied from the telephone line and outputs it to the printer 46. The modem 48 modulates the coded data supplied from the fax codec 47 and also demodulates the coded data from the NCU 49. NCU 49 controls connection/disconnection between the facsimile machine #4 and the second `communication unit #1. NCU 49 includes a third call signal detection circuit 53 for detecting a 16 Hz call signal sent from the second communication unit #1 and a fourth call signal detection circuit 54 for detecting a 1,300 Hz call signal sent from the second communication unit #1. The key input part 50 is equipped with various numerical keys and the like to allow the user to input a telephone number and the like. LCD 51 displays various information input by the user, such as a telephone number. The sound gene rat or 52 may be a bell or a buzzer.

The facsimile machine #4 also includes CPU 55 for controlling the above mentioned elements, ROM 56 for permanent storage of programs and data necessary for the control performed by CPU 55 and RAM 57 for temporary storage of data necessary for the control. The facsimile machine #4 has its own attached handset T.

Next, operation of the wireless system of the present invention will be described.

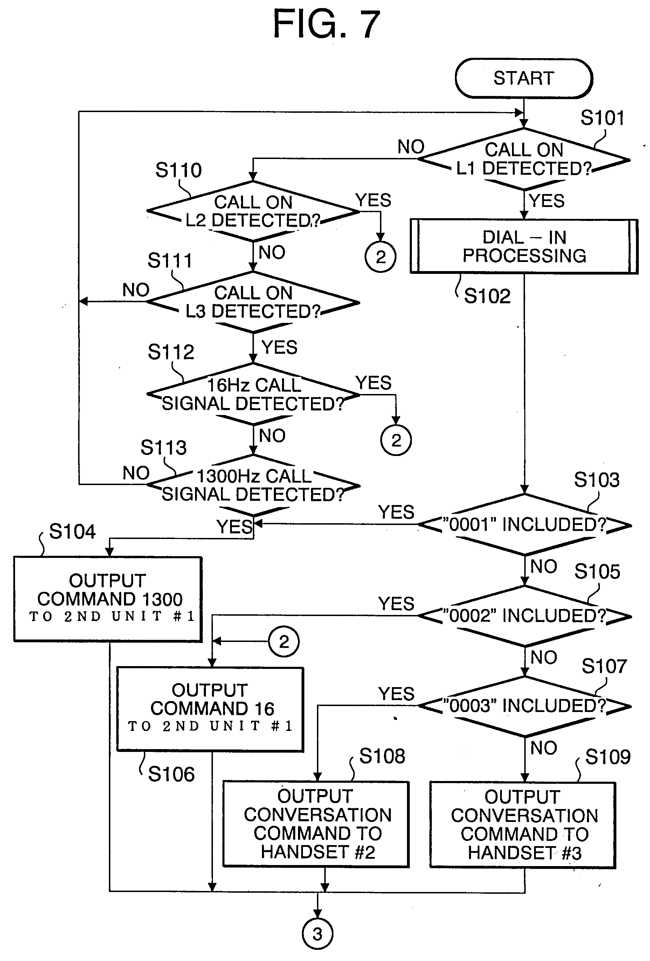

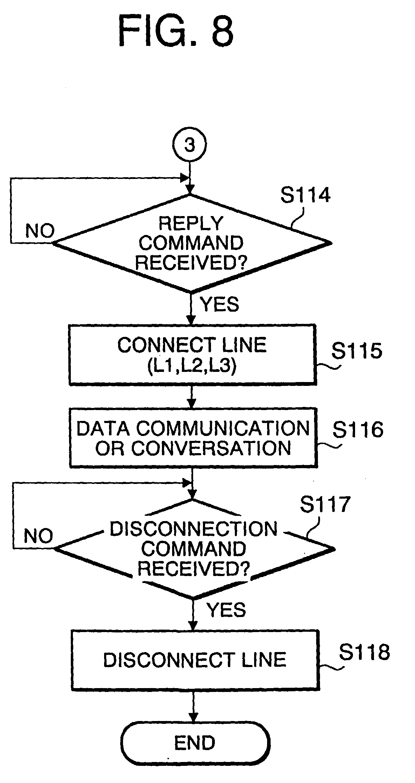

Operations of the main communication unit #0 when it receives a call from an outside line from the exchange Y through the telephone lines L1 to L3 will first be described with reference to flowcharts shown in Figures 7 and 8.

At step S101, CPU 22 determines if there is a call on the dial-in exclusive-use line L1. If YES, the program proceeds to dial-in processing (S102).

In the dial-in processing, the telephone line L1 is connected such that a direct current loop is established between the main communication unit #0 and the exchange Y. This formation of the direct current loop is detected as a primary response signal by the exchange Y, and then a touch-tone signal corresponding to the dial-in telephone number (facsimile number) is sent to the main communication unit #0 from the exchange Y. As this touch-tone signal is detected by the DTMF detection circuit 15, the dial-in processing circuit 11 disconnects the line L1 so that the direct current loop between the main communication unit #0 and exchange Y is opened. The opening of the direct current loop is detected by the exchange Y as a signal indicating completion of an extension number reception, In the meantime, the extension number (dial-in number) carried on the touch-tone signal is deciphered by the dial-in processing circuit 11. By referring to the telephone number table 24a in RAM 24 (Figure 6), the main communication unit #0 selects one of the second communication unit #1 and cordless handsets #2 and #3 based on the deciphered dial-in number.

After the dial-in process of S102, the program advances to step S103, At step S103, it is determined whether or not the last four figures of the telephone number acquired at step S102 are "0001". If YES, a digitized command 1300 is output to the second communication unit #1 at step S104. If NO, it is then determined if the last four figures of the telephone number are "0002" at step S105. If so, a command 16 is output to the second communication unit #1 at step S106.

If the dial-in telephone number does not have "0002" as its last four digits, the program proceeds to step S107 to determine whether the dial-in telephone number has "0003" as its last for digits. If YES, a digitized command signal is supplied to the cordless handset #2 to allow ordinary conversation (voice communication) at step S108. If NO at step S107, the last four digits of the dial-in number are determined to be "0004" and a digitized command signal for ordinary telephone conversation is fed to the cordless handset #3 at step S109.

At step S101, if it is determined that there is no call on the first telephone line L1, then the program goes to step S110 to determine if the call is on the second telephone line (facsimile line) L2. If YES, the program immediately proceeds to step S106. On the other hand, if NO, it is determined whether the call is on the third telephone line (F net line) L3 at step S111. If NO, the system X maintains a stand-by condition. If the answer is YES, the program goes to step S112 to determine if a 16 Hz call signal from the exchange Y is detected. If detected, the program advances to step S106. If not detected, it is then determined if a 1,300 Hz call signal from the exchange Y is detected at step S113. If YES, then the program proceeds to step S104. If NO, the system X is set to the stand-by condition.

When one of steps S104, S106, S108 or S109 is executed, it is then determined whether a reply command is received from the second communication unit #1 or cordless handsets #2 and #3 at step S114 (Figure 8). The reply command is a command to inform the main communication unit #0 that the second communication unit #1 or cordless handsets #2 and #3 is ready for communication. If the reply command is detected, the designated line L1/L2/L3 is connected at step S115. Next, procedures for facsimile transmission or telephone conversation are carried out to (i) allow for facsimile transmission with the facsimile machine #4 (or #5) via the second communication unit #1 or telephone conversation with the attached handset T of the facsimile machine, (ii) to allow telephone conversation with the cordless handset #2 or (iii) to allow telephone conversation with the cordless handset #3 (S116). If a disconnection command is detected at step S117, the program goes to step S118 to terminate the connection. The disconnection command is a signal requiring disconnection of the line upon completion of facsimile data reception or telephone conversation.

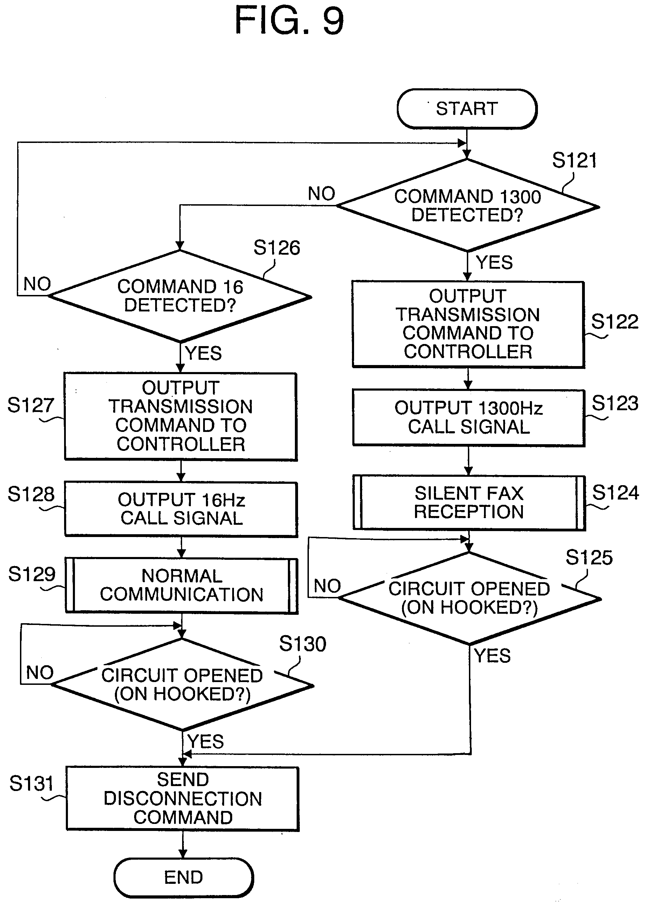

Referring to Figure 9, operations of the second communication unit #1 that receives the command signal from the main communication unit #0 will be described.

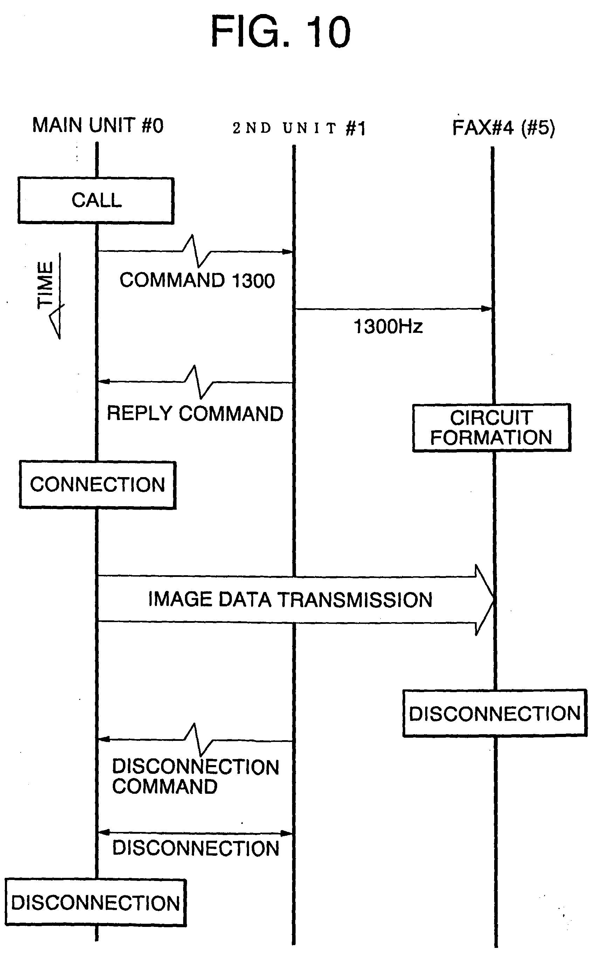

At step S121, it is determined if a command 1300 is detected. If YES, CPU 32 outputs a transmission command to the sub CPU 35 at step S122 and the sub CPU 35 causes the pseudo exchange circuit 31 to output a 1,300 Hz call signal to the facsimile machine #4 (or #5) via the terminals P1 and P2 based on the transmission command at step S123. Next, the program proceeds to silent facsimile data reception at step S124. Figure 10 illustrates the silent facsimile data reception. In this reception mode, when the main communication unit #0 receives a call, it wirelessly transmits a command 1300 to the second communication unit #1. Then, the second communication unit #1 outputs a 1,300 Hz call signal to the associated facsimile machine #4 (or #5). Upon detecting this call signal, the facsimile machine #4 (or #5) establishes a direct current circuit or loop without ringing. When the second communication unit #1 confirms this loop formation, it stops sending the 1,300 Hz call signal and outputs a digital reply command signal to the main communication unit #0. As the main communication unit #0 receives this reply command signal, it establishes a connection via the telephone line L1 and carries out procedures together with the second communication unit #1 for data reception or transmission. Thereafter, the main communication unit #0 starts image data transmission to the facsimile machine #4 (or #5) through the second communication unit #1. It should be noted that the second communication unit #1 does not wait for a CED signal which is a reply signal in response to a 1,300 Hz call signal. This is because the 1,300 Hz call signal always represents facsimile data. Referring back to Figure 9, the second communication unit #1 confirms if the facsimile communication is finished and the direct current loop is opened at step S125. After confirmation, the second communication unit #1 outputs a digital command signal to the main communication unit #0 to disconnect wireless connection at step S131. This terminates the facsimile data reception.

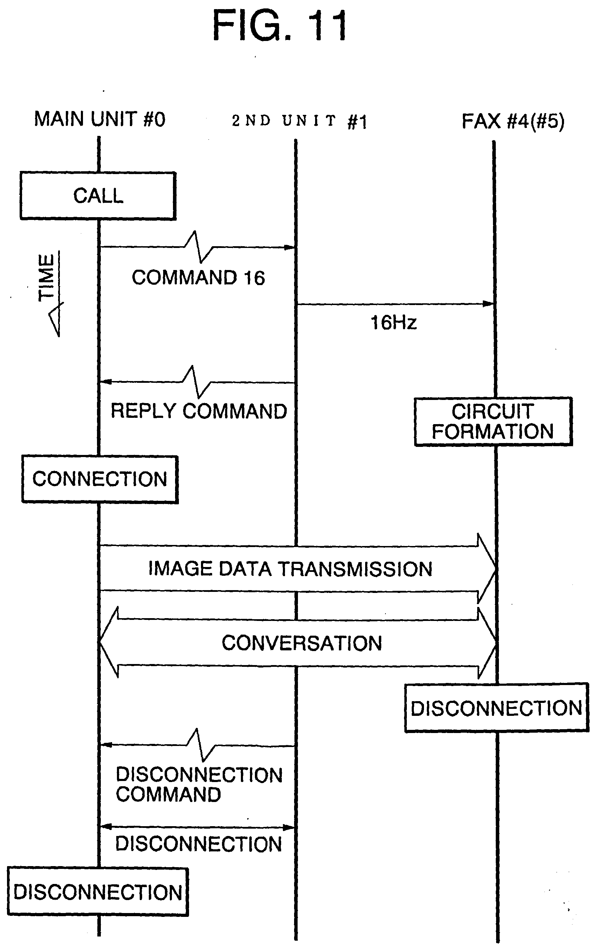

If a command 1300 is not detected at step S121, it is determined at step S126 whether a command 16 is detected. If detected, CPU 32 outputs a transfer command to the sub CPU 35 at step S127 and the sub CPU 35 causes the pseudo exchange circuit 31 to output a 16 Hz call signal to the facsimile machine #4 (or #5) via the terminals P1 and P2 based on the transfer command at step S128. At the next step S129, the program goes to ordinary telephone conversation or facsimile data reception (referred to as "ordinary communication procedures"). Referring to Figure 11, the ordinary communication procedures will be described. When the main communication unit #0 receives the call, it wirelessly transmits the command 16 to the second communication unit #1. Then, the second communication unit #1 outputs a 16 Hz call signal to the associated facsimile machine #4 (or #5). Upon detecting the 16 Hz call signal from the second communication unit #1, the facsimile machine #4 (or #5) causes the sound generator 52 to generate a ringing sound. If telephone conversation is desired and the attached telephone T of the facsimile machine #4 (or #5) is picked up, the direct current circuit or loop is made. If facsimile data reception is desired, the direct current loop is made after a predetermined number of rings. When the second communication unit #1 detects establishment of the direct current loop, it stops sending the 16 Hz call signal and outputs a digital reply command to the main communication unit #0 to signal that it is ready for conversation or facsimile data reception. Upon receiving the reply command, the main communication unit #0 connects the telephone line and executes procedures together with the second communication unit #1 for communication with a remote terminal. This initiates image data transmission to the facsimile machine #4 (or #5) via the second communication unit #1 or voice communication (conversation) between the main communication unit #0 and the second communication unit #1. Referring back to Figure 9, when the second communication unit #1 confirms completion of the facsimile data reception or conversation and the subsequent opening of the direct current circuit at step S130, it outputs a digital command signal to the main communication unit #0 to disconnect the wireless communication line at step S131. This terminates the facsimile data reception or telephone conversation.

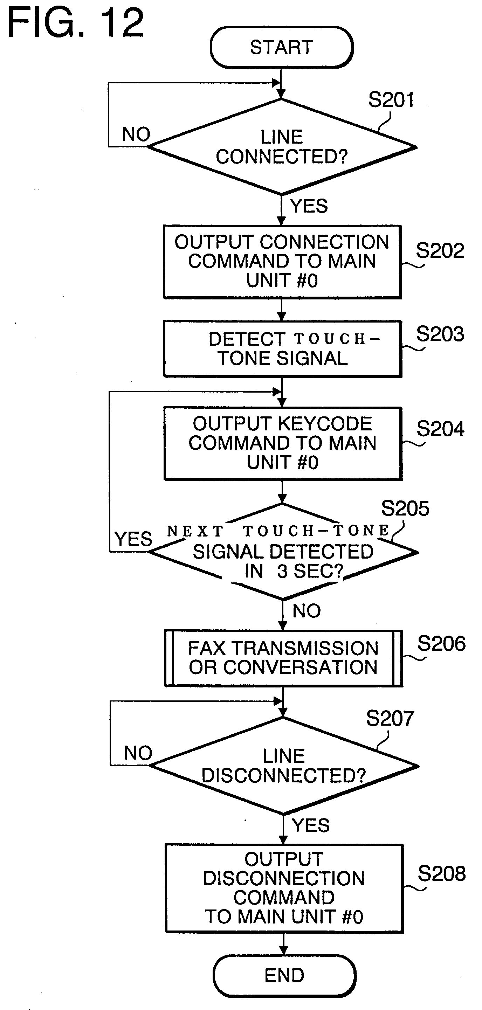

Next, the operation of the second communication unit #1 when fax transmission occurs between the facsimile machine #4 or #5 and an outside fax or a telephone call is made to a remote telephone from the handset T of the facsimile machine #4 (or #5) is explained in reference to the flowchart of Figure 12.

At step S201, it is determined whether or not the direct current circuit of the facsimile machine #4 (or #5) is closed. If YES, a digital command signal is output to the main communication unit #0 at step S202. The closing of the direct current circuit is detected by the sub CPU 35. The command signal is first output to CPU 32 of the main portion R1 of the second communication unit #1 and then transferred to the main unit #0. Upon receiving this command, the main unit #0 performs the line connection. When a touch-tone signal from the facsimile number or telephone number input at the facsimile machine #4 (or #5) is detected at step S203, the second communication unit #1 sequentially outputs to the main unit #0 a digitized keycode command based on the touch-tone signal at step S204. The touch-tone signal is detected by the sub CPU 35. The keycode command is first sent to CPU 32 of the main portion R1 and then sent to the main unit #0. In other words, the touch-tone signal is not transmitted to the main unit #0 directly, but coded before transmitted to the main unit #0. This prevents the touch-tone signal from causing the wireless communication system X to malfunction.

If a responding touch-tone signal is not detected within three seconds at step S205, it is determined that dialing is finished, and the facsimile data transmission is initiated or voice communication is allowed at step S206. In this particular embodiment, the voice transmission circuit from the second communication unit #1 to the main communication unit #0 is maintained in an open condition until the dialing is finished. Accordingly, the touch-tone signal output from the facsimile machine #4 (or #5) is not transmitted to the main communication unit #0.

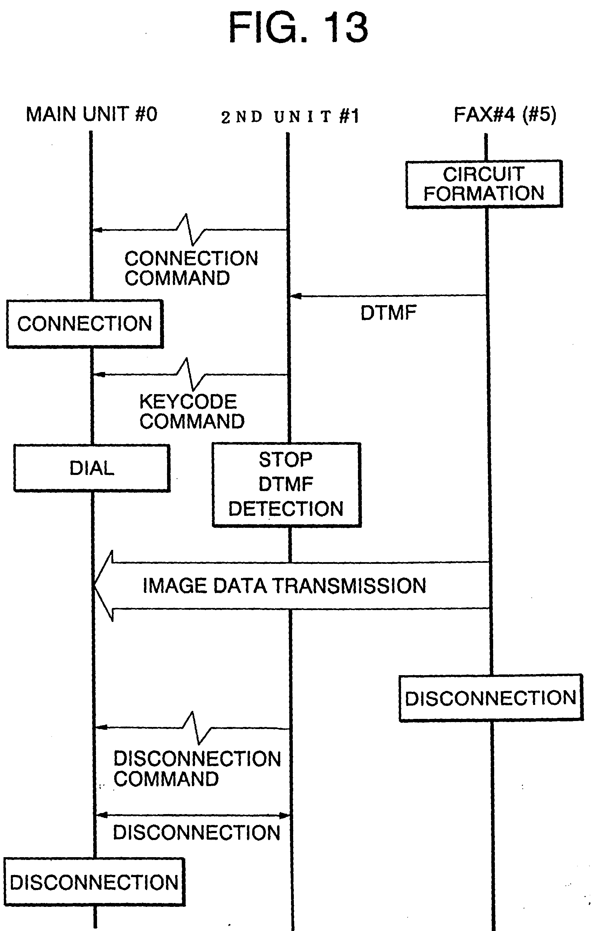

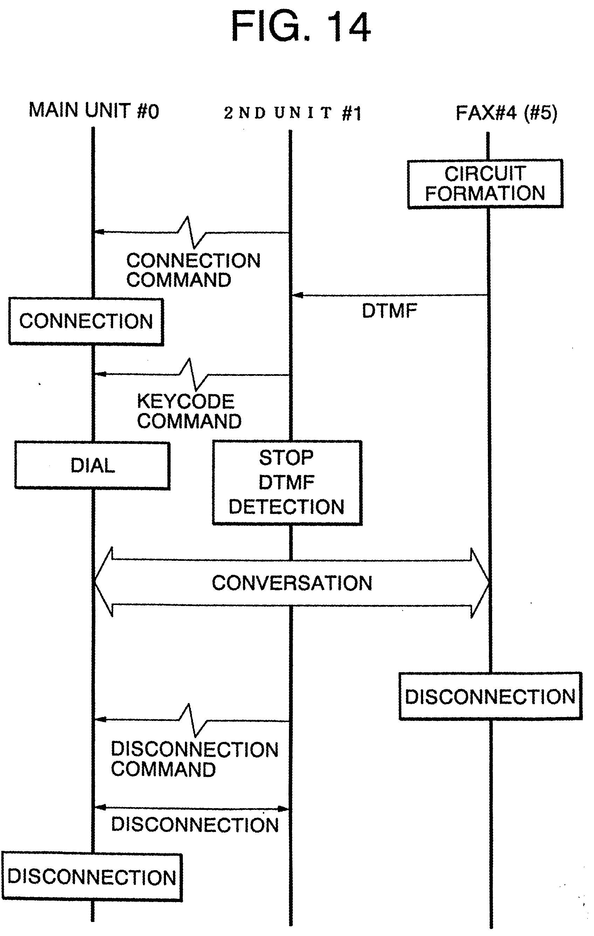

When the direct current circuit is opened upon completion of the facsimile data transmission or telephone conversation, the second communication unit #1 confirms this at step S207 and outputs a digital command to the main unit #0 for wireless line disconnect ion at step S208. This terminates the facsimile data transmission or telephone conversation. Figure 13 illustrates a timing chart to show a routine executed when the facsimile data is transmitted and Figure 14 illustrates a routine when the voice communication is allowed.

### Second Embodiment:

A second embodiment of a wireless communication system of the present invention will be described with reference to Figures 5, 15, 16(a) and 16(b), which system includes a second communication unit and a facsimile machine as a third communication unit connected with the second communication unit in such a way that the second and third communication units can identify the other element.

The wireless communication system of this embodiment is similar to that of the first embodiment, so the same reference numerals are assigned to like parts and signals in this embodiment. In the second embodiment, however, the facsimile machine #4 has a particular functionality and the second communication unit #1 is able to identify the facsimile machine #4 (Figure 5).

Referring to Figure 15 which is similar to Figure 2, particularly illustrated is the internal structure of a terminal portion R2 of the second communication unit #1.

The terminal portion R2 of the second communication unit #1 is connected with a main portion R1 by an analog reception line (RXA) 131, an analog transmission line (TXA) 132, a digital reception line (RXD) 141 and a digital transmission line (TXD) 142. Aural signals are exchanged between the main communication unit #0 and the facsimile machine #4 through RXA 131 and TXA 132 via the main portion R1. Digital command signals are exchanged between the main communication unit #0 and a control 143 through RXD 141 and TXD 142 via the main portion R1. The control 143 is connected with RXA 131 via a tone generation module 134 and is connected with TXA 132 via a DTMF detection device 133. RXA 131 and TXA 132 can be connected with connection terminals L11 and L12 via a 2-line/4-line conversion circuit 135. The connection terminals L11 and L12 of the second communication unit #1 are connections to the facsimile machine #4. Specifically, the terminal L11 is a reception terminal and the terminal L12 is a transmission terminal. A line extends from the terminal L11 to a common contact of a relay RR and another line extends from the terminal L12 to an offhook detector 136 and in turn to a common contact of another relay RT. In Figure 15, the relays RR and RT are connected to the 2-line/4-line conversion circuit 135 but these relays may be switched for connection to a CI generator 137.

The DTMF detector 133 detects a 900 Hz tone and a DTMF tone supplied from the facsimile machine #4 to TXA 132, decodes these tones and provides them to the control 143 as a DTMF detection signal SO. As the tone generator 134 receives a control signal from the control 143, it then generates a 1,300 Hz tone corresponding to F net data reception, a pseudo 900 Hz tone or a busy tone (BT) indicating that a line is busy, and outputs it to RXA 132.

A control signal is fed to the CI generator 137 from the control 143. When there is a CI reception on the main communication unit #0, the main communication unit #0 supplies necessary data and commands to the control 143 via the main portion R1. Then, the control 143 feeds the above mentioned control signal to the CI generator 137. Upon receiving this control signal, the CI generator 137 produces a 16 Hz call signal (CI). At the same time, the control 143 causes the relays RR and RT to connect the CI generator 137 with the connections L11 and L12. Accordingly, the 16 Hz call signal (CI) from the CI generator 137 is transferred to the facsimile machine #4.

The offhook detector 136 detects if the facsimile machine #4 is in an offhook condition, i.e., if the facsimile machine #4 is communicating with an outside facsimile machine via the telephone line. If it detects creation of an offhook condition, an offhook signal OH is generated and fed to the control 143. In other words, when the facsimile machine #4 is in an onhook condition, the offhook detector 136 does not produce an offhook signal OH.

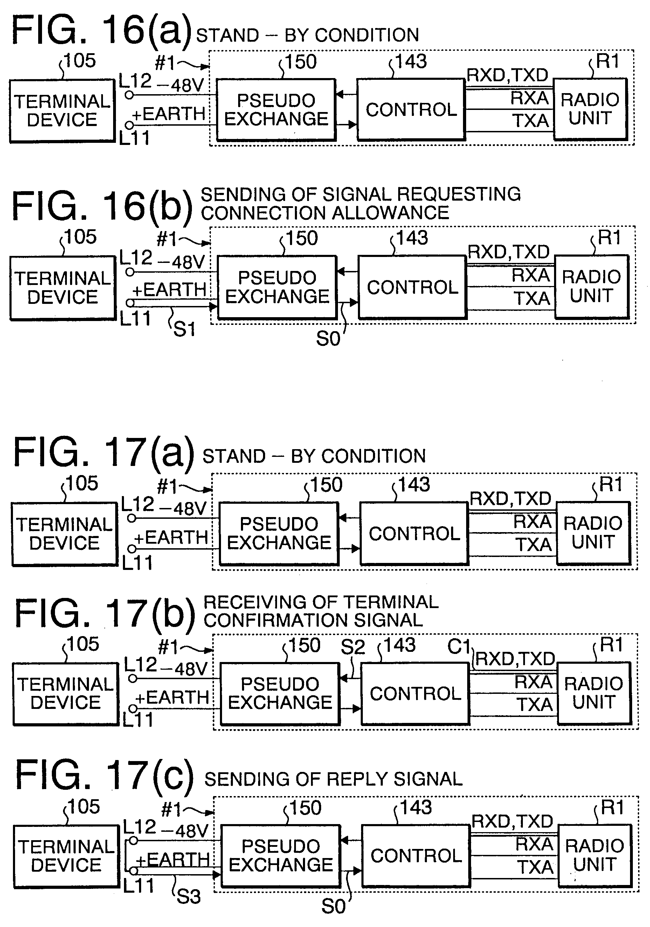

Referring to Figures 16(a) and 16(b), illustrated is one example of how it can be determined whether or not the facsimile machine # is connected with the second communication unit #1. In these illustrations, the second communication unit #1 is used as an adapter, and a reference numeral 105 designates a terminal device such as the facsimile machine #4. It should also be noted that parts other than the main portion R1 and control 143 are collectively referred to as a pseudo exchange module 150.

A connection allowance signal (i.e., a signal for permission of connection between the second communication unit #1 and the terminal device 105 (#4)) is sent to the second communication unit #1 from the terminal device 105 at predetermined intervals so that the second communication unit is always possible to confirm if the terminal device 105 has a particular functionality.

In Figure 16(a), the terminal device 105 is in the stand-by state so that no facsimile data is transmitted or received if the terminal device 105 is a facsimile machine. Of course, the terminal device 105 is in an onhook condition so that the offhook detector 136 outputs an offhook signal OH to the control 143.

When the offhook signal OH is sent to the control 143, the control 143 knows that the terminal device 105 is in the stand-by state.

While the terminal device 105 is in the stand-by state, the terminal device 105 sends a signal S1 requesting connection allowance to the second communication unit #1 at predetermined intervals T1 in the form of 900 Hz pseudo tone as illustrated in Figure 16(b). The request signal S1 from the terminal device 105 is input to the second communication unit #1 at the reception point L11 and detected by the pseudo exchange 150. Specifically, the request signal S1 is input to the DTMF detector 133 (Figure 15) through the offhook detector 136, relay RT and 2-line/4-line converter 135. The DTMF detector 133 detects the request signal S1 and outputs to the control 143 a DTMF detection signal SO indicating that the 900 Hz pseudo tone has been detected.

The control 143 issues permission for data transmission/reception to/from the terminal device 105 only when it is receiving the DTMF detection signal SO from the DTMF detector 133 at the predetermined intervals T1. This is because constantly receiving the DTMF signal SO indicates that the terminal device 105 has a particular functionality. Specifically, upon receiving the first DTMF signal SO, the control 143 allows the terminal device 105 to receive/transmit data within the period T1, and this continues as long as the control 143 subsequently receives the DTMF signal SO. However, if a period T2 longer than the period T1 elapses without receiving a next DTMF signal SO, then the control 143 prohibits the terminal device 105 from sending/receiving data after the elapsed period T1.

By performing the above mentioned processing using the control 143, the second communication unit #1 can determine whether or not the terminal device 105 has a particular functionality.

Figures 17(a) through 17(c) illustrate in combination another example of how to determine the connection status of the terminal device 105. It should be noted here that the same reference numerals are used in Figures 16(a) through 17(c).

In this example, when electric power is first supplied to the second communication unit #1 (in actuality, when the second communication unit #1 unit is first plugged into a socket on a wall), the second communication unit #1 sends a terminal confirmation signal to the terminal device 105 to determine whether the terminal device 105 has a particular functionality.

Referring to Figure 17(a), if it is determined that the terminal device 105 is in an on hook condition at the second communication unit #1 is first plugged in, the control 143 of the second communication unit #1 is able to know that the terminal device 105 is in the stand-by state, as in the first example shown in Figure 16(a).

When the terminal device 105 is in the stand-by condition, the control 143 transmits a terminal confirmation signal S2 to the terminal device 105 in the form of 900 Hz pseudo tone as illustrated in Figure 17(b). Specifically, after the control 143 performs an initial setting immediately after the second communication unit #1 is turned on, the control 143 sends a control signal to the tone generator 134 to cause it to output a 900 Hz pseudo tone. The terminal confirmation signal S2 from the tone generator 134 is input to the terminal device 105 from the reception point L1 through RXA 131, 2-line/4-line converter 135 and relay RR. In the illustrated embodiment, the terminal confirmation signal S2 is continuously transmitted from the second communication unit #1 at fixed intervals until the direct current circuit is established or closed.

Referring now to Figure 17(c), when the terminal confirmation signal S2 is detected, a prescribed reply signal S3 is sent back from the terminal device 105 in the form of 4-digit DTMF tone. It should be noted that Figure 17(c) illustrates the DTMF tone (S3) being transmitted from the terminal device 105 after formation of the direct current circuit (loop). Connection between the points L11 and L12 indicates formation of the direct current circuit. The terminal device 105 eventually opens the direct current circuit.

The signal S3 from the terminal device 105 is input to the second communication unit #1 at the reception pint L12 and detected by the pseudo exchange 150. Specifically, the signal S1 requesting connection permission is sent to the DTMF detector 133 through the offhook detector 136, relay RT and 2-line/4-line converter 135 and detected by the DTMF detector 133. Next, the signal S1 is decoded and supplied to the control 143 from the DTMF detector 133 in the form of a DTMF detection signal SO.

If the value indicated or represented by the signal SO coincides with a predetermined value, the control 143 of the second communication unit #1 judges that the terminal device 105 has a particular functionality and allows thereafter the terminal device 105 to send/receive data. If these values are not equivalent to each other or no DTMF detection signal SO is output from the DTMF detector 133 within a predetermined period, then the terminal confirmation signal S2 is repeatedly sent at predetermined intervals. If a desired DTMF tone is received from the terminal device 105 while the terminal confirmation signal S2 is being sent, the second communication unit #1 also allows the terminal device 105 to send/receive data. On the other hand, if the second communication unit #1 does not receive the DTMF tone from the terminal device 105 while it is continuously sending the signal S2, the second communication unit #1 prohibits data transmission/sending of the terminal device 105.

It should be noted that if the electric power to the second communication unit #1 is cut off and started again, the same processing as described above will be repeated.

As understood from the foregoing, since the control 143 carries out the above mentioned operations, the second communication unit #1 can determine if the terminal device 105 has a particular functionality.

Referring to Figures 18(a) to 18(g), still another example of how to determine the connection status of the terminal device will be described. This third example deals with F net data reception. The same reference numerals as the previous examples are used in this example.

In this example, the second communication unit #1 transmits a terminal confirmation signal to the terminal device 105 when data comes through the F net, in order to determine the status of the terminal device 105.

Referring to Figure 18(a), the terminal device 105 is in a stand-by condition so that the terminal device 105 does not receive or send any data if it is a facsimile machine. The terminal device 105 is in the onhook state so that an offhook detection signal OH is not output from the offhook detector 136.

Since an offhook detection signal OH is not output, the second communication unit #1 determines that the terminal device 105 is in the stand-by condition. In this situation, if data arrives at the main communication unit #0 (Figure 5) through the F net (i.e., if there is a call of 1,300 Hz tone), such a fact is wirelessly informed to the second communication unit #1. The control 143 knows this fact by receiving a code signal sent from the main portion or radio unit R1 via RXD 141 so that a terminal confirmation signal S2 is output to the terminal device 105 in the form of 900 Hz pseudo tone as illustrated in Figure 18(b). Specifically, when the main communication unit #0 detects arrival of a 1,300 Hz signal from the F net and reports it to the second communication unit #1 by wireless communication, the control 143 sends a control signal to the tone generator 134 thereby causing the tone generator 134 to output a 900 pseudo tone (signal S2). The pseudo tone or signal S2 is transmitted to the terminal device 105 from the contact point L11 through RXA 131, 2-line/4-line converter 135 and relay RR.

When the terminal device 105 detects the signal S2, it creates a hooking operation. As a result, the offhook detector 136 of the second communication unit #1 detects the offhooking condition of the terminal device 105 and outputs an offhook detection signal OH to the control 143, as illustrated in Figure 18(c). By having the offhook signal OH, the control 143 is able to know that the terminal device 105 has a particular functionality which conforms with this wireless communication system X.

After it is confirmed that the terminal device 105 is compatible with the wireless communication system X, ordinary F net data reception is carried out. Specifically, as illustrated in Figure 18(d), the control 143 feeds a control signal to the tone generator 134 causing the tone generator to output a 1,300 Hz tone thereby calling the terminal device 105. Upon receiving the 1,300 Hz tone, the terminal device 105 closes the direct current circuit for line connection, as illustrated in Figure 18(e) (L11 and L12 are connected in the drawing). Consequently, the offhook detector 136 detects the offhook condition of the terminal device 105 and outputs an offhook signal OH to the control 143. Thus, the control 143 knows that the terminal device 105 is receiving data and sends a "during communication" code C1, which indicates data reception, to the main portion R1 via TXD 142. The control 143 also stops sending the 1,300 Hz tone to the terminal device 105. The handset main portion R1 informs the main communication unit #0 of data arrival.

Next, the terminal device 105 operates as a data receiving facsimile as illustrated in Figure 18(f). When the facsimile data reception is completed, the terminal device 105 opens the direct current circuit, as illustrated in Figure 18(g) (connection between L11 and L12 is cut in the illustration). Upon this circuit opening, the offhook detector 136 detects the creation of an on hook condition of the terminal device 105 and stops sending the offhook detection signal OH to the control 143. Accordingly, the control 143 judges that the facsimile communication is finished and sends a "disconnection" code C2 to the main portion R1 via TXD 412. The second communication unit #1 informs the main communication unit #0 of line disconnection.

Since the control 143 executes the above described processing, the facsimile data reception through the F net is only allowed when the terminal device 105 has a particular functionality.

Figures 19(a) to 19(g) illustrate yet another example of how the connection status of the terminal device 105 is determined. This example particularly deals with common data reception (data reception by a 16Hz call signal, which is generally referred to as CI reception). The same reference numerals as the previous examples are used to designate the same parts and signals in this example.

In the fourth example, when there is a call on an ordinary telephone network (or telephone line L2), the second communication unit #1 sends a terminal confirmation signal to the terminal device 105 to confirm the connection status of the terminal device 105.

Referring to Figure 19(a), the terminal device 105 is in a stand-by condition so that no data is being transmitted from or received by the terminal device 105. Since the terminal device 105 is in an onhook condition, no offhook detection signal OH is output from the offhook detector 136.

Since the offhook detection signal OH is not issued, the second communication unit #1 determines that the terminal device 105 is in the stand-by condition. In this situation, if there is a call (CI reception) from a general network (or telephone line L2) to the main communication unit #0 (Figure 5), i.e., if there is a call of 16 Hz tone, arrival of the call is reported to the second communication unit #1 by a radio communication technique. Since the control 143 knows that there was CI reception by receiving information from the main portion R1 via RXD 141, a terminal confirmation signal S2 in the form of 900 Hz pseudo tone is output to the terminal device 105 as illustrated in Figure 19(b). Specifically, when the main communication unit #0 detects arrival of a 16 Hz CI signal and wirelessly informs the second communication unit #1 of such a fact, then the control 143 sends a control signal to the tone generator 134 to force the tone generator 134 to output a 900 Hz pseudo tone. The 900 Hz pseudo tone from the tone generator 134 (or signal S2) is input to the terminal device 105 from the reception point L11 through RXA 131, 2-line/4-line converter 135 and relay RR.

Upon detecting the 900 Hz pseudo tone, the terminal device 105 creates an offhook condition. Therefore, the offhook detector 136 of the second communication unit #1 detects the creation of an offhook condition of the terminal device 105 and outputs an offhook detection signal OH to the control 143 as shown in Figure 19(c). Consequently, the control 143 can determine that the terminal device 105 has a particular functionality, i.e., that the terminal device 105 is compatible with the system X.

When compatibility of the terminal device 105 with the system X is confirmed, the ordinary CI reception procedures are carried out. Specifically, the control 143 outputs a control signal to switch the relays RR and RT toward the CI generator 137 and then feeds a control signal to the CI generator 137 to cause it to output a 16 Hz call signal (CI) thereby calling the terminal device 105 as illustrated in Figure 19(d). Upon receiving the 16 Hz call signal, the terminal device 105 forms a direct current circuit as illustrated in Figure 19(e). Accordingly, the offhook detector 136 detects the creation of an offhook condition of the terminal device 105 and outputs an offhook signal OH to the control 143. As a result, the control 143 switches the relays RR and RT to normal positions respectively, i.e., to a normal condition in which the reception point L11 and transmission point L12 are connected with RXA 131 and TXA 132. In the meantime, when the control 143 detects that the terminal device 105 closes the direct current circuit and is ready for data reception, it sends a "communication" code C1 to the handset main portion R1 via TXD 142. The code C1 indicates the data arrival. The control 143 also stops sending the 16 Hz call signal (CI) to the terminal device 105. The main portion R1 informs the main communication unit #0 of data arrival.

Next, facsimile communication or voice communication (telephone conversation) over the handset T is permitted and the terminal device 105 is in the communication condition as shown in Figure 19(f). When the communication is completed, the terminal device 105 opens the direct current circuit as depicted in Figure 19(g). Consequently, the offhook detection circuit 136 detects creation of the onhook condition of the terminal device 105 so that it stops sending the offhook detection signal OH to the control 143. The control 143 then judges that the communication is finished and outputs a "disconnect" code C2 to the handset main portion R1 via TXD 142. The radio communication module R1 of the second communication unit #1 informs the main communication unit #0 of line disconnection.

Since the control 143 performs the above described controlling, the facsimile data reception and telephone conversation through the common (telephone) network (telephone line L2) is permitted only if the terminal device 105 has a particular functionality.

It should be note here that the pseudo tone generated by the tone generator 134 in the foregoing description is a 900 Hz tone, but the present invent ion is not limited to this frequency. It is of course possible to use a pseudo tone having a different frequency.

As understood from the foregoing description, the present invention can demonstrate the following advantages:
(1) Data exchange between the wirelessly connected main communication unit #0 and second communication unit #1 occurs digitally, so compared with use of an analog signal, the effects of noises and transmission wave distortions on the image ata are minimized, and the quality of the transferred image is maintained at an appropriate level.
(2) No wireless interfaces are attached to the facsimile machine #4/#5.
(3) When a command for silent facsimile data reception is output to the second communication unit #1 from the main communication unit #0, the CPU 32 and CPU 143 of the second communication unit #1 generate a pseudo 1,300 Hz call signal and feed it to the facsimile machine #4 (or #5). Therefore, even if there is a call signal from outside the F net, a pseudo 1,300 Hz call signal is assigned to the call signal and fed to the facsimile machine #4 (or #5) so that the facsimile machine #4 (or #5) recognizes it as a call from F net, Accordingly, facsimile data reception without ringing is also possible even if a call with a request of silent reception comes from outside the F net.
(4) If an ordinary reception mode (reception with ringing) is selected, a pseudo 16 Hz call signal is sent to the facsimile machine #4 (or #5) from the second communication unit #1. Therefore, a user can arbitrarily select either the silent reception mode or ordinary reception mode.
(5) The call signal from the exchange Y is detected by the main communication unit #0 without directly sending it to the second communication unit #1. Therefore, the second communication unit #1 does not have the first and second call signal detection circuits 13 and 14, the DTMF detection circuit 15, the dial-in processing circuit 11 and associated parts. Accordingly, the second communication unit #1 can have a very simple structure and a small size so that relocation of the second communication unit #1 is easy.
(6) Because the main communication unit #0 is equipped with the dial-in processing circuit 11, the terminal device (105) associated with the second communication unit #1, such as the facsimile machine #4, can be used for dial-in communication even if it is not equipped with the dial-in processing circuit.

It should be noted that the present invent ion is not limited to the illustrated embodiments. For example, the following changes and modifications can be made.
(i) The PSTN network, which is an analog network, is used as the communication network in the above embodiments, but an ISDN network, which is a digital network, may be used; and the channel codec 4 of the main communication unit #0 may be connected with the ISDN network via an ISDN interface. By employing this arrangement, data transmission speed of over 32 kbps can be realized.
(ii) The terminal device 105 is a facsimile machine in the above embodiments, but a personal computer or printer provided with communication functions may be used as the terminal device. It is then feasible to transmit not only white/black binary image data but also color image data.
(iii) The call signal for silent data reception from F net is a 1,300 Hz signal in the above embodiments, but a call signal having a different frequency may be used.
(iv) The CPU 32 in the second communication unit #1 produces the 1,300 or 16 Hz pseudo call signal and the pseudo exchange circuit 31 outputs it to the facsimile machine #4 (or #5), but a separate oscillation circuit may be provided to output the pseudo call signal to the pseudo exchange circuit 31. This oscillation circuit may be incorporated in the pseudo exchange circuit.
(v) The second communication unit #1 is equipped with means for monitoring line connection/disconnection and circuit closing/opening of the terminal device. This monitoring means is the control 143 in the illustrated embodiment.
(vi) Since the dial-in processing circuit 11 and the second call signal detection circuit 13 are incorporated in the main communication unit #0, the second communication unit #1 can have a simple structure.

## Claims

1. A wireless communication system comprising:
a main communication unit connected with a network;
a second communication unit wirelessly connected with the main communication unit such that data is exchanged between the main communication unit and second communication unit using a digital signal; and
a third communication unit directly connected with the second communication unit.

2. The wireless communication system of claim 1, wherein the second communication unit includes pseudo exchange means and is detachable from the third communication unit.

3. The wireless communication system of claim 2, wherein the main communication unit includes:
detection means for detecting a call signal supplied to the main communication unit through the network and for identifying the kind of call signal; and
output means for outputting to the second communication unit a command signal indicative of the kind of the call signal based on detection result,
the second communication unit causing, upon receiving the command signal from the output means of the main communication unit, the pseudo exchange means to output to the third communication unit a particular kind of pseudo call signal based on the command signal.

4. The wireless communication system of claim 3, wherein the pseudo exchange means is adapted to output a pseudo call signal to the third communication unit such that the third communication unit receives data without ringing if the command signal sent from the output means carries a request for data reception without ringing.

5. The wireless communication system of claim 3, wherein the kind of the call signal is 16Hz signal for ringing reception or 1,300Hz signal for silent reception.

6. The wireless communication system of claim 3, wherein the pseudo exchange means is adapted to output a pseudo call signal to the third communication unit such that the second communication unit allows the third communication unit to receive data without ringing if the command signal sent from the output means carries a request for data reception without ringing.

7. The wireless communication system of claim 2, wherein the pseudo exchange circuit is designed to serve as an interface equivalent to PSTN.

8. A wireless communication system comprising:
a main communication unit connected with a network;
a second communication unit wirelessly connected with the main communication unit; and
a third communication unit directly connected with the second communication unit, the third communication unit sending a predetermined signal to the second communication unit at predetermined intervals, and the third communication unit being allowed to send and receive data only when the second communication unit detects the predetermined signal.

9. A wireless communication system comprising:
a main communication unit connected with a network;
a second communication unit wirelessly connected with the main communication unit; and
a third communication unit directly connected with the second communication unit, the second communication unit sending a predetermined signal to the third communication unit upon first receiving electricity for activation of the second communication unit, and the third communication unit being allowed to send and receive data only when the third communication unit sends a predetermined tone signal in response to the predetermined signal.

10. A wireless communication system comprising:
a main communication unit connected with a network;
a second communication unit wirelessly connected with the main communication unit; and
a third communication unit directly connected with the second communication unit, the second communication unit sending a pseudo call signal to the third communication unit in response to a call signal indicating arrival of call supplied from the main communication unit, and the third communication unit being allowed to send and receive data only when the third communication unit sends a predetermined tone signal in response to the pseudo call signal.
